# EUROPEAN PATENT APPLICATION

(11) **EP 1 785 653 A1**
(43) Date of publication of application: **16.05.2007**
(21) Application number: 06020204.1
(22) Date of filing: 27.09.2006
(51) Int. Cl.: F16K 17/10

(54) **Control valve**

(30) Priority: 09.11.2005 IT RE20050123
(71) Applicant: Braglia SRL, 42029 Masone RE (IT)
(72) Inventor: Braglia, Vitaliano, 42100 Gavasseto-Reggio Emilia (IT)
(74) Representative: Gotra, Stefano

(57) **Abstract**

The device for regulating pressure in watering plants comprises an inlet conduit (7) of a fluid, associated to a watering plant (2) in which a fluid pressure is to be regulated; and an outlet conduit (8) of the fluid, associated to a fluid supply source (3). A first obturator (9) is arranged between the inlet conduit (7) and the outlet conduit (8) and is commutable between a closed condition in which passage of fluid is interrupted from the inlet conduit (7) to the outlet conduit (8) and an open condition in which the fluid is allowed to pass. A regulating element (16) places the inlet conduit (7) in fluid communication with the outlet conduit (8) when a preset pressure value of the fluid at the inlet conduit (7) is exceeded.

## Description

The invention relates to a device for regulating pressure in watering plants of various types, such as for example irrigation plants.

As is known, some types of watering plants need to maintain a constant fluid outflow pressure. For example, in the case of irrigation plants for agricultural use, the water dispensing pressure must be constant in order for the plant to irrigate all of the interested zones homogeneously.

To maintain the pressure of the water constant, pressure relief valves are normally used, housed along a bypass conduit arranged downstream of a water source. In this way, if the outlet water pressure is too high, the valve enables recycling of the water via the bypass conduit towards the source rather than towards the users.

In particular, these valves are constituted by an obturator that closes the conduit when the pressure is maintained within a predefined value. The obturator is kept closed by a pusher device, generally a helix spring which is calibrated according to the predefined pressure value.

In a case where the pressure value of the source increases above the predefined value, the force of the spring is overcome and the flow of water displaces the obturator, giving rise to a passage hole for the fluid along the bypass conduit. In other words, in this situation the spring is compressed and the obturator raised beyond the passage section of the bypass conduit.

Consequently, the high-pressure water is partly deviated towards the bypass conduit in order to return to the supply source. In this way, the pressure in the water circuit is re-established and kept below the predefined value.

The applicant has noted that the above-described valves exhibit some important drawbacks, in particular in relation to performance.

It is worthy of note that the spring is not very sensitive to small pressure variations. This is due to the fact that in order to maintain the bypass closed off even at high pressures a particularly large-section and large size spring is used. This means that the spring is not highly sensitive to small pressure variations.

Further, another drawback linked to the size of the spring is the weight and size thereof, contributing to the valve's being large and excessively heavy.

A further drawback is that the water discharging operation through the bypass does not occur immediately. This drawback causes an increase in water pressure adjustment times internally of the plant.

In this situation, the technical task of this invention is to provide a device for regulating the pressure in watering plants which device substantially overcomes the above-cited drawbacks.

In the ambit of the technical task, an important aim of the invention is to design a device for regulating pressure in watering plants which is of limited size, light, constructionally simple and economical to realise.

A further aim of the present invention is to provide a device for regulating pressure in watering plants which is particularly sensitive to small pressure variations.

The technical task and the specified aim set are substantially attained by a device for regulating pressure in watering plants according to what is described in the appended claims.

A description of the invention will now be made, illustrated purely by way of non-limiting example in the accompanying figures of the drawings, in which:
figure 1 is a schematic representation of a watering plant provided with a device for regulating the pressure in accordance with the present invention;
figure 2 is a side-view in section and in a first operative position of the device for regulating the pressure of figure 1;
figure 3 is a side-view in section and a second operative position of the device for regulating the pressure of figure 1.

With reference to the figures of the drawings, the device for pressure regulation of the invention is denoted in its entirety by 1.

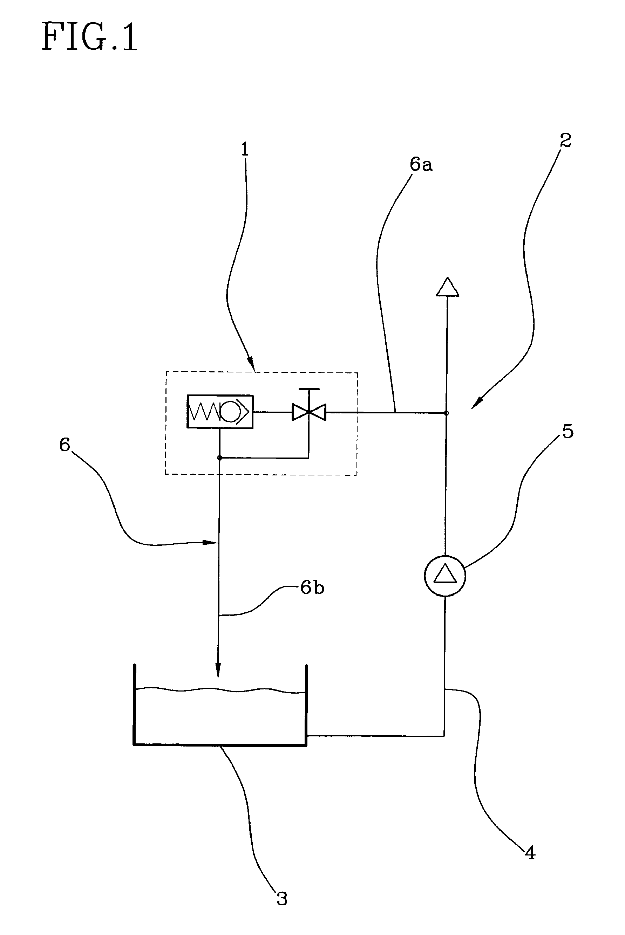

As is schematically illustrated in figure 1, the device 1 is used in watering plants 2 of various types. Advantageously the device is used in irrigating plants in which the fluid, usually water, is dispensed directly from a source 3, such as for example a cistern, towards the users which can be constituted by nozzles or sprayers. The plant 2 exhibits a main conduit 4 provided with a pump 5 for conveying the water towards the users, not shown in the figures as they do not form part of the present invention.

A bypass conduit 6 develops downstream of the pump 5, which bypass conduit 6 exhibits a first end 6a which is associated to the main conduit 4 and a second end 6b which is associated to the source 3. The object of the present invention is housed between the ends 6a, 6b of the bypass conduit 6.

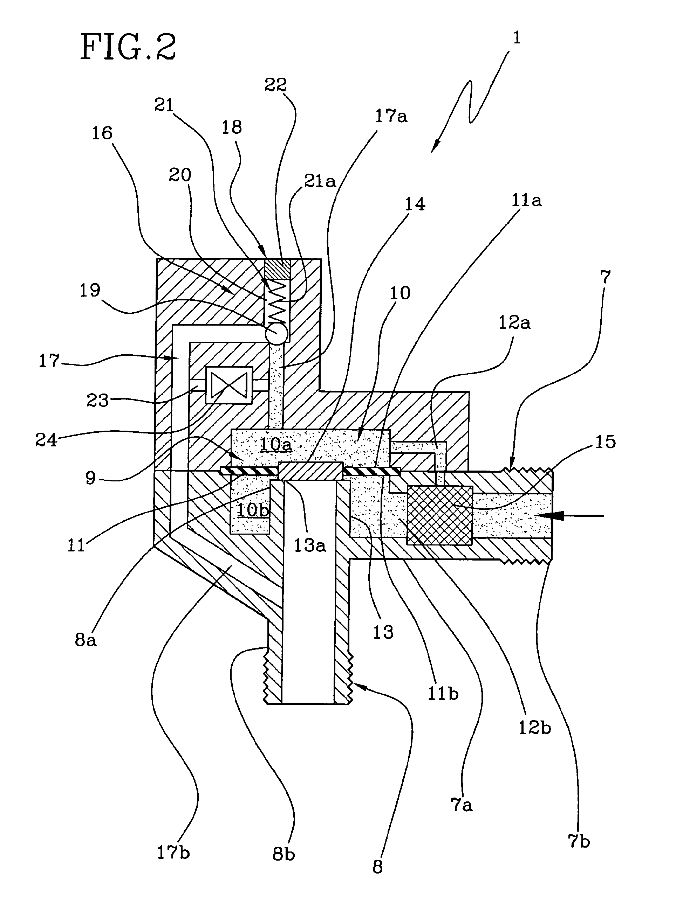

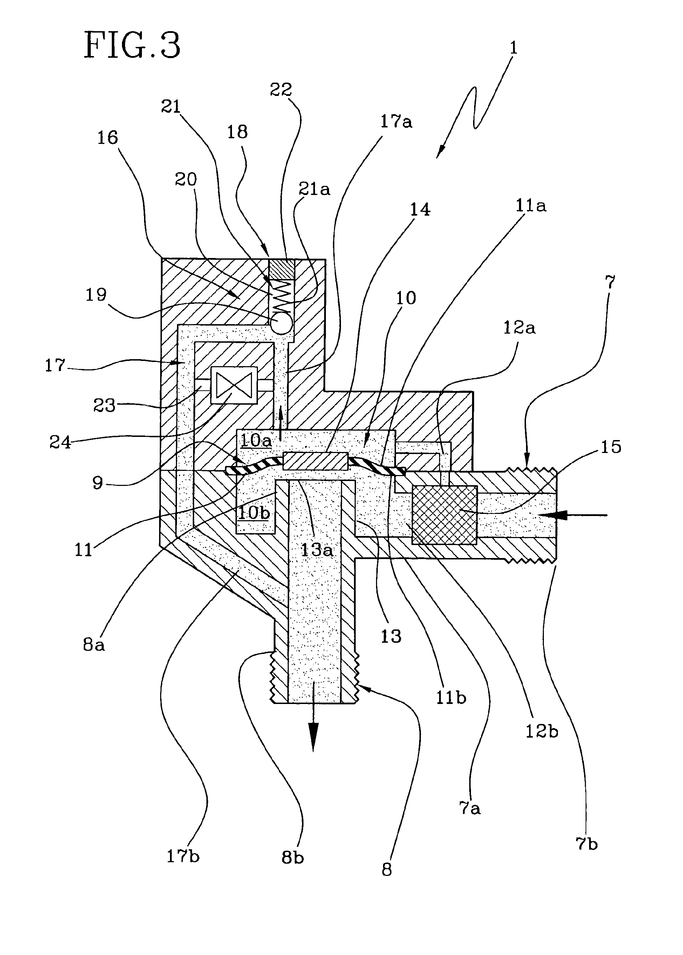

In greater detail, as illustrated in figures 2 and 3, the device 1 exhibits an inlet conduit 7 associated to the first end 6a of the bypass conduit 6 of the watering plant 2 to which the fluid pressure is to be regulated.

The device further exhibits an outlet conduit 8 associated to the second end 6b of the bypass conduit 6 to convey the fluid in inlet from the inlet conduit 7 towards the supply source 3.

A first obturator 9 develops between the inlet conduit 7 and the outlet conduit 8, which obturator 9 can shift between a closed condition, in which it interrupts passage of the fluid from the inlet conduit 7 to the outlet conduit 8 and an open condition, in which it permits passage of fluid.

In greater detail, the first obturator 9 is located in a respective housing chamber 10 to which respective first ends 7a, 8a of the inlet conduit 7 and the outlet conduit 8 are associated. The inlet conduit 7 further exhibits a second end 7b which is opposite the first end 7a and is predisposed to be constrained to the first end 6a of the bypass conduit 6. Similarly, the outlet conduit exhibits a second end 8b which is constrained to the second end 6b of the bypass conduit 6.

The first obturator 9 is constituted by an elastic membrane 11 associated to the internal wall of the chamber 10 in such a way as to divide the chamber 10 into a first zone 10a and a second zone 10b.

In this situation, it should be noted that the membrane 11 exhibits an upper surface 11a defined in the first zone 10a and a lower surface 11b opposite the upper surface 11a, defined in the second zone 10b.

Also noteworthy is the fact that the first end 7a of the inlet conduit 7 exhibits a branch-off defining a first channel 12a and a second channel 12b for fluid discharge. The first channel 12a sets the first zone 10a of the chamber 10 in communication with the second end 7b of the inlet conduit 7, while the second channel 12b sets the second zone 10b of the chamber 10 in communication with the second end 7b of the inlet conduit 7.

The first end 8a of the outlet conduit 8 advantageously exhibits a cylindrical protuberance 13 which extends internally of the second zone 10b of the chamber 10. The cylindrical protuberance 13 exhibits a substantially tubular conformation, in which a circular opening 13a facing towards the first obturator 9 is defined. In this situation, note that the second zone 10b exhibits an annular confirmation as it is defined between the cylindrical protuberance 13 and the internal walls of the chamber 10.

As illustrated in figure 2, in the closed condition of the first obturator 9, the circular opening 13a of the above-mentioned protuberance 13 is occluded by a rigid portion 14 engaged to the elastic membrane 11.

In particular, the rigid portion 14 exhibits a substantially flat conformation and is arranged in a central zone of the elastic membrane 11. As illustrated in figure 3, in the open condition of the first obturator 9, the rigid portion 14 is distanced from the cylindrical portion 13 in order to permit fluid passage from the inlet conduit 7 to the outlet conduit 8, via the second channel 12b, the second zone 10b and the circular opening 13a.

The device 1 preferably further exhibits a filtering element 15 arranged in the first end 7a of the inlet conduit 7.

In greater detail, the filtering element 15 is constituted by a purification cylinder arranged between the first channel 12a and the second channel 12b for discharging the fluid, for filtering the fluid in inlet to the device 1.

The device 1 also comprises a regulating element 16 for setting the inlet conduit 7 in fluid communication with the outlet conduit 8 when a preset pressure level is exceeded at the inlet conduit 7.

In particular, the regulating element 16 is constituted by an auxiliary conduit 17 which bypasses the first obturator 9 to bring the fluid from the inlet conduit 7 to the outlet conduit 8. The auxiliary conduit 17 exhibits a first end 17a associated to the first zone 10a of the chamber 10 and a second end 17b associated to the outlet conduit 8 between the first end 8a and the second end 8b.

A second obturator 18 develops internally of the auxiliary conduit 17 and in particular between the respective first end 17a and second end 17b, and is mobile in the closed position of the first obturator 9 between an open position in which it allows the fluid to pass along the auxiliary conduit 17 (figure 3) and a closed position in which it does not allow the fluid to pass along the auxiliary conduit 17 (figure 2).

In detail, the second obturator 18 exhibits a sphere 19 housed in the second auxiliary conduit 17 in the closed position (figure 2) to occlude the conduit 17, and inserted in a containment chamber 20, communicating with the auxiliary conduit 17 in the open position (3) in order to allow fluid passage. The sphere 19 is engaged to a pusher organ 21, also housed in the containment chamber 20 for keeping the sphere 19 between the first end 17a and the second end 17b of the auxiliary conduit 17.

The pusher organ 21 is advantageously constituted by an elastic element 21a such as for example a helix spring which, in a case where the pressure level exceeds the preset value, is compressed so as to disengage the sphere 19 from the auxiliary conduit 17.

The pusher 21 is preferably associated to means for regulating 22 which are schematically illustrated and which calibrate the pusher 21 according to the preset pressure value.

The means for regulating 22 can for example be constituted by a pre-tensioner for the helix spring or by an electric gear reducer calibrated according to the preset pressure value.

The device 1 further exhibits a discharge passage 23 for setting the first end 17a of the auxiliary conduit 17 in fluid communication with the second end 17b of the auxiliary conduit 17b. A valve 24 is arranged internally of the discharge passage 23, which valve can be commutated between an open position for allowing fluid passage from an upstream zone of the second obturator 18 to a downstream zone of the second obturator 18, and a closed position in order not to allow passage of fluid.

The valve 24 is preferably constituted by a faucet for allowing the second obturator 18 to be bypassed and to cause the fluid to flow from the inlet conduit 7 to the outlet conduit 8, maintaining the first obturator 9 and the second obturator 18 in the respective closed positions.

During use, starting from a condition in which the first obturator 9 and the second obturator 18 are in the closed positions, the device 1 interrupts fluid passage from the inlet conduit 7 to the outlet conduit 8 and thus through the bypass conduit 6 of the plant 2.

In this situation, the fluid passes through the first channel 12a to fill the first zone 10a of the chamber 10 and through the second channel 12b to fill the second zone 10b of the chamber 10. The upper surface 11 a of the membrane 9 is larger than the lower surface 11b, so the fluid at the first zone 10a is at greater pressure than the fluid at the second zone 10b. Consequently, the elastic membrane 11 is pushed towards the second zone 10b to occlude the outlet conduit 8.

Also, the pusher 21 holds the sphere 19 in the auxiliary conduit 17 as the pressure of the fluid in the first zone 10a and the first end 17a of the auxiliary conduit 17 is not sufficient to displace the sphere 19 and compress the pusher 19.

In a case where the pressure of the fluid in the inlet conduit 7 increases to above the preset value, the force of the pusher 21 which acts on the sphere 19 is overcome, causing a compression of the pusher 21 and the insertion of the sphere 19 internally of the chamber 20.

In this situation, clearly illustrated in figure 3, the fluid passes through the auxiliary conduit 17 up to the outlet conduit 8. Consequently, a depression is created at the first zone 10a which enables the membrane 9 to deform and detach from the outlet conduit 8. In this way, the fluid exits through the second zone 12b towards the outlet conduit 8, returning the fluid towards the source 3.

The pressure internally of the plant 2 is advantageously restored by taking part of the fluid towards the source 3 up to when a pressure value lower than the preset value is reached.

Should it become necessary to change the preset pressure value, the pusher 21 can be calibrated by acting on the means for regulating 22.

Further, should it be necessary to empty the plant 2, the valve 24 is opened, enabling fluid to pass along the discharge passage 23.

It is advantageously possible to cause the fluid to flow along the bypass conduit 6 also in a case where the first and the second obturators 9, 18, are in the closed condition.

The invention offers important advantages.

Firstly, the first obturator 9 occludes the fluid passage by means of the pressure of the fluid itself. The first obturator 9 is opened according to the pressure internally of the first and second zones 10a, 10b of the chamber 10.

Thus, pushers are not arranged at the first obturator 9, with a consequent saving in the overall size of the device 1.

Further, by arranging the pusher 21 at the second obturator 18, which has the exclusive function of creating a depression in the zone 10a, it is possible to use a helix spring having small dimensions, which is therefore more sensitive to small pressure variations.

A further advantage is given by the possibility of causing the fluid to flow along the bypass conduit even during normal use conditions, i.e. even when the pressure is within the preset limits. By acting on the valve 24 it is possible to bypass the first and the second obturators 9, 19 to cause the fluid to flow from the inlet conduit 7 to the outlet conduit 8. The operation is particularly useful during maintenance work on the plant 2, where users can be replaced without having to shut the pump down.

## Claims

1. A device for regulating pressure in watering plants, comprising:
an inlet conduit (7) of a fluid, associated to a watering plant (2) in which a fluid pressure is to be regulated;
an outlet conduit (8) of the fluid, associated to a fluid supply source (3);
a first obturator (9) arranged between the inlet conduit (7) and the outlet conduit (8) and commutable between a closed condition in which passage of fluid is interrupted from the inlet conduit (7) to the outlet conduit (8) and
an open condition in which the fluid is allowed to pass;
**characterised in that** it further comprises a regulating element (16) for placing the inlet conduit (7) in fluid communication with the outlet conduit (8) when a preset pressure value of the fluid at the inlet conduit (7) is exceeded.

2. The device of claim 1, **characterised in that** the regulating element (16) comprises an auxiliary conduit (17) associated to the inlet conduit (7) and the outlet conduit (8); and a second obturator (18) which, when the first obturator (9) is closed, is mobile between an open position in which it allows the fluid to pass along the auxiliary conduit (17) and a closed position in which it does not allow the fluid to pass along the auxiliary conduit (17).

3. The device of claim 2, **characterised in that** it further comprises a housing chamber (10) of the first obturator (9); the inlet conduit (7) and the outlet conduit (8) exhibiting first ends (7a, 8a) located at the chamber (10) and second ends (7b, 8b) associated to the watering plant (2).

4. The device of claim 3, **characterised in that** the first obturator (9) comprises an elastic membrane (11) associated to an internal wall of the chamber (10); the chamber (10) exhibiting a first zone (10a) which is located at an upper surface (11a) of the membrane (11) and a second zone (10b) which is opposite and separated from the first zone (10a) and located at a lower surface (11b) of the membrane (11).

5. The device of claim 4, **characterised in that** the first end (7a) of the inlet conduit (7) comprises a first discharge channel (12a) and a second discharge channel (12b) of the fluid; the first channel (12a) placing the first zone (10a) of the chamber (10) in fluid communication with the second end (7b) of the inlet conduit (7), and the second channel (12b) placing the second zone (10b) of the chamber (10) in fluid communication with the second end (7b) of the inlet conduit (7).

6. The device of claim 4 or 5, **characterised in that** the auxiliary conduit (17) exhibits a first end (17a) which is associated to the first zone (10a) of the chamber (10) and a second end (17b) which is associated to the outlet conduit (8), between the first end (8a) and the second end (8b).

7. The device of any one of claims from 4 to 6, **characterised in that** the first end (8a) of the outlet conduit (8) exhibits a cylindrical projection (13) which extends in the second zone (10b) of the chamber (10) and exhibits a circular opening (13a) facing towards the first obturator (9); the second zone (10b) exhibits an annular conformation and is defined between the cylindrical protuberance (13) and the internal walls of the chamber (10).

8. The device of claim 7, **characterised in that** the elastic membrane (11) exhibits a rigid portion (14) having a substantially flat conformation; the rigid portion (14) being associated to the circular opening (13a) of the cylindrical protuberance (13) in order to occlude the opening (13a) in the closed condition of the first obturator (9), and being distanced from the opening (13a) when the first obturator (9) is in the open condition.

9. The device of any one of claims from 5 to 8, **characterised in that** it further comprises a filtering element (15) arranged in the first end (7a) of the inlet conduit (7).

10. The device of claim 9, **characterised in that** the filtering element (15) exhibits a purification cylinder arranged between the first and second channels (12, 12b) of the fluid.

11. The device of any one of claims from 6 to 10, **characterised in that** the second obturator (18) comprises a sphere (19) housed in the auxiliary conduit (17) between the first end (17a) and the second end (17b) in the closed position of the second obturator (18), and housed in a containment chamber (20) communicating with the auxiliary conduit (17) when the second obturator (18) is open.

12. The device of claim 11, **characterised in that** the second obturator (18) further comprises a pusher organ (21) housed in the containment chamber (20) for maintaining the sphere (19) between the first end (17a) and the second end (17b) of the auxiliary conduit (17) when the fluid pressure in the inlet conduit (7) and in the first zone (10a) of the chamber (10) is lower than the preset pressure value.

13. The device of claim 12, **characterised in that** the pusher organ (21) exhibits an elastic element (21a) associated to the sphere (19) and means for regulating (22) associated to the elastic element (21) for determining the preset pressure value required for displacing the sphere (19) internally of the chamber (20).

14. The device of claim 13, **characterised in that** the elastic element (21 a) comprises a helix spring.

15. The device of claim 14, **characterised in that** the means for regulating (22) comprise an electric gear reducer calibrated according to the preset pressure value.

16. The device of any one of claims from 6 to 15, **characterised in that** it further comprises a discharge passage (23) for placing the first end (17a) of the auxiliary conduit (17) in fluid communication with the second end (17b) of the auxiliary conduit (17), and a valve (24) arranged in the discharge passage (23) and commutable between an open position for allowing fluid passage from a zone which is upstream of the second obturator (18) and a zone which is downstream of the second obturator (18) and a closed position which does not permit passage of fluid.

17. The device of the preceding claims, **characterised in that** the valve (24) comprises a faucet.
